# EUROPÄISCHE PATENTSCHRIFT

(11) **EP 1 472 817 B1**
(45) Veröffentlichungstag und Bekanntmachung des Hinweises auf die Patenterteilung: **02.08.2006**
(21) Anmeldenummer: 01270980.4
(22) Anmeldetag: 14.12.2001
(51) Int. Cl.: H04L 12/00, H04L 12/56

(54) **VERFAHREN ZUR SYNCHRONEN UND ASYNCHRONEN DATENÜBERTRAGUNG IN EINEM AD HOC-NETZWERK**
METHOD FOR OPERATING AN AD-HOC NETWORK FOR THE WIRELESS DATA TRANSMISSION OF SYNCHRONOUS AND ASYNCHRONOUS MESSAGES
PROCEDE POUR FAIRE FONCTIONNER UN RESEAU AD-HOC POUR LA TRANSMISSION DE DONNEES SANS FIL DE MESSAGES SYNCHRONE ET ASYNCHRONE

(30) Priorität: 14.12.2000 DE 10062303
(43) Veröffentlichungstag der Anmeldung: 03.11.2004
(73) Patentinhaber: 7 Layers AG, 40880 Ratingen (DE)
(72) Erfinder: MECKELBURG, Hans-Jürgen, 42329 Wuppertal (DE); HORN, Michael, 46240 Bottrop (DE)
(74) Vertreter: Albrecht, Rainer Harald
(86) Internationale Anmeldenummer: PCT/EP2001/014739
(87) Internationale Veröffentlichungsnummer: WO 2002/049274

(56) Entgegenhaltungen:
- EP-A- 0 999 717
- DE-A- 19 737 897
- LIN C R ET AL: "Asynchronous multimedia multihop wireless networks" INFOCOM '97. SIXTEENTH ANNUAL JOINT CONFERENCE OF THE IEEE COMPUTER AND COMMUNICATIONS SOCIETIES. DRIVING THE INFORMATION REVOLUTION., PROCEEDINGS IEEE KOBE, JAPAN 7-11 APRIL 1997, LOS ALAMITOS, CA, USA,IEEE COMPUT. SOC, US, 7. April 1997 (1997-04-07), Seiten 118-125, XP010252002 ISBN: 0-8186-7780-5
- HAARTSEN J: "BLUETOOTH - THE UNIVERSAL RADIO INTERFACE FOR AD HOC, WIRELESS CONNECTIVITY" ON - ERICSSON REVIEW, ERICSSON. STOCKHOLM, SE, Nr. 3, 1998, Seiten 110-117, XP000783249 ISSN: 0014-0171

## Beschreibung

Die Erfindung betrifft ein Verfahren zum Betrieb eines Ad Hoc-Netzwerkes zur drahtlosen Übertragung von synchronen und asynchronen Nachrichten,
wobei das Netzwerk aus beliebig verteilten Netzknoten aufgebaut ist, die jeweils eine Empfangseinrichtung mit Eingabecontroller, eine Vermittlungsstelle und eine Sendeeinrichtung mit Ausgabecontroller aufweisen,
wobei für zu übertragende logische Verbindungen nach einem Routingverfahren Übertragungswege von einem Startknoten zu einem Zielknoten über zwischenliegende Knoten festgelegt werden und
wobei die Knoten lokale Adress- und Steuerinformationen (LCI) verwalten, die den logischen Verbindungen zugeordnet sind und dem vorhergehenden Knoten des Übertragungsweges mitgeteilt werden.

Ein Ad Hoc-Netzwerk kommt ohne zentrale Netzelemente aus. Es wird von zufällig verteilten Netzknoten gebildet, welche die Datenübertragung sicherstellen. Jeder neue Knoten, der dazu kommt, wird nach einer festgelegten Prozedur in das Netzwerk integriert, das sich ohne organisatorische Abläufe selbst organisiert. Die Netzwerkknoten auf dem Übertragungsweg zwischen einem Startknoten und einem Zielknoten übernehmen die Aufgabe eines Transferknotens mit einer Vermittlungsstelle (Switch). Die Knoten erhalten einen Nachrichtenblock (Symbol-Vektor) und übertragen diesen zu dem nächsten günstigen Knoten, bis letztlich die Nachricht am Zielknoten eingetroffen ist.

Bei einem aus DE-C 197 37 897 bekannten Verfahren zum Betrieb eines Ad Hoc-Netzwerkes werden die von den Knoten empfangenen Signale von dem jeweiligen Kanal auf einem hiervon verschiedenen Sendekanal umgesetzt, wobei die Umsetzung des auf dem Empfangskanal ankommenden Symbolstromes auf den Sendekanal symbolweise erfolgt. Die symbolweise Umsetzung bedeutet, dass an jedem Knoten lediglich eine Verzögerung in der Größenordnung von einer Symbolstelle des Symbolstromes erforderlich ist. Die Verzögerung hängt damit zusammen, dass eine Synchronisation der Symbolfolge auf den ankommenden Kanälen und den abgehenden Kanälen normalerweise nicht vorhanden ist, so dass eine gewisse Wartezeit erforderlich ist, bevor das abgehende Signal in Synchronisation mit den Sendekanälen ausgesandt werden kann. Die Verzögerung beträgt ein bis zwei Symbolstellen, welche sich auf dem Übertragungsweg addieren.

Ferner ist eine paketweise Datenübertragung zwischen den Stationen eines Datenübertragungsnetzes aus dem Internet bekannt. Hier werden Daten zu Paketen gebündelt, die über den jeweils günstigsten Übertragungsweg übermittelt werden. Die paketweise Übertragung ermöglicht die Übertragung großer Datenmengen. Allerdings ist eine schnelle Datenübertragung mit einer konstanten und kleinen Zeitverzögerung nicht sichergestellt.

Dokument "Asynchronous multimedia multihop wireless networks Lin C.R. et al, Infocom 97 offenbart die Übertragung von synchronen und asynchronen Nachrichten in einem Ad-Hoc-Netzwerk

Der Erfindung liegt die Aufgabe zugrunde, ein Verfahren zum Betrieb eines Ad Hoc-Netzwerkes zur drahtlosen Übertragung anzugeben, mit dessen Hilfe man Datenpakete auf Basis des Internetprotokolls (IP) bzw. des Asynchronous Transfer Mode Standards (ATM) sehr schnell und flexibel in einer vermaschten Netzkonfiguration übertragen kann.

Ausgehend von einem Verfahren mit den eingangs beschriebenen Merkmalen wird die Aufgabe erfindungsgemäß durch die Merkmale der Ansprüche gelöst.

Gemäß einer bevorzugten Ausführungsform der Erfindung werden die Datenpakete in Form von Symbolvektoren übertragen, die aus einer fest vorgegebenen Anzahl von parallel übertragenen Symbolen und einem Kopf zur Identifizierung des Symbolvektors bestehen. Die Symbolvektoren beinhalten zum einen das zu übertragende Datenpaket mit der maximalen Übertragungsgröße (Maximum Transmission Unit MTU) und einen minimalen Kopf (Header) zur Identifizierung des Symbolvektors. Ferner können die Symbolvektoren noch Elemente zur Signalisierung enthalten. Die einzelnen Symbolvektoren der verschiedenen logischen Verbindungen werden nacheinander in den Knoten verarbeitet und von einem Netzknoten zum anderen Netzknoten vorzugsweise nach einem Frequenzmultiplex-Verfahren, das unter dem Begriff Orthogonal Frequency Division Multiplex (OFDM) an sich bekannt ist, übertragen. Der hierzu verwendete Symbolstrom der Informations- und Nachrichtenblöcke wird in eine definierte Anzahl von Teilströmen aufgeteilt, die dann auf eine entsprechende Zahl von Trägern digital moduliert werden.

In dem festgelegten Zeitrahmen werden auch systemspezifische Symbolvektoren zur Synchronisation der Sende- und Empfangseinrichtungen benachbarter Knoten übertragen. Die systemspezifischen Symbolvektoren tragen eine bekannte Sequenz, z. B. M-Sequenz, die zyklisch gesendet wird und deren Abstand den Zeitrahmen, auch "Hyperframe" genannt, bildet. Die Sende- und Empfangseinrichtungen der Knoten können mit der M-Sequenz Funkkanalparameter messen und die Modulation einstellen sowie Synchronfehler zwischen den Knoten berechnen und ausgleichen. Innerhalb des Zeitrahmens wird ferner zweckmäßig eine Anzahl von Leervektoren übertragen, die zur Beseitigung von Synchronfehlern zwischen Empfangs- und Sendeeinrichtung benachbarter Knoten bei Bedarf in einem Knoten entfernt werden.

Eine Fehlererkennung und -korrektur kann mit Hilfe von Forward Error Connection (FEC) Maßnahmen sowohl über einen Symbolvektor als auch über jeden parallel laufenden Symbolstrom erfolgen.

Das erfindungsgemäße Verfahren vereint die Vorteile asynchroner arbeitender an Netzstrukturen mit den Vorteilen synchron arbeitender Netzstrukturen. Während asynchron arbeitende Netzstrukturen optimale Ergebnisse liefern für paketorientierte Applikationen, die keine zeitliche Bezugnahme zur Datenübertragung haben, benötigen Real Time-Applicationen wie "Voice Over IP" oder "Video On Demand" die Gewährleistung, dass die Datenpakete in einer definierten Zeit übertragen werden und Verzögerungen nicht überproportional variieren. Erfindungsgemäß werden Datenpakete, die keine überproportionale Verzögerung zulassen, synchron übertragen, wobei nach der Festlegung des Übertragungsweges durch ein Routingverfahren alle Knoten des Netzwerkes auf der Übertragungsstrecke entsprechende Zeitschlitze für die jeweilige logische Verbindung reservieren. Nach der Festlegung des Übertragungsweges für eine synchron übertragene logische Verbindung wird überprüft, ob die für die Synchronübertragung erforderlichen Zeitschlitze auf Funkkanälen zur Verfügung stehen. Alle Knoten des Übertragungsweges reservieren die Zeitschlitze und teilen den Vorgängerknoten die Adresseninformation und den reservierten Zeitschlitz mit. Bei der Festlegung des Übertragungsweges und der Zeitschlitze für eine synchron zu übertragende Verbindung kann der Fall eintreten, dass zwei unabhängige logische Verbindungen zufälligerweise zwischen zwei Knoten dieselben Zeitschlitze beanspruchen. In diesem Fall wird für eine der Verbindungen an einem Knoten eine Zeitverzögerung vorgeschlagen, wobei alle Zeitverzögerungen des Übertragungsweges von dem Startknoten bis zum Zielknoten addiert werden und die Summe der Zeitverzögerungen für die Synchronübertragungen einen Vorgabewert von vorzugsweise 150 Millisekunden nicht überschreiten darf. Wird der Grenzwert eingehalten, kann die Konstellation genutzt werden. Sollte die Zeitverzögerung nicht akzeptabel sein, dann muss das Routingverfahren einen alternativen Pfad suchen oder aber die Anforderung ablehnen, so dass eine synchrone Datenübertragung für die logische Verbindung nicht aufgebaut wird.

Bei paketorientierten Applikationen, die keine zeitliche Bezugnahme zur Datenübertragung haben, werden die anstehenden Datenpakete in entsprechend kleine Symbolvektoren aufgeteilt. Diese Symbolvektoren werden auf einem durch das Routingverfahren festgelegten Übertragungsweg asynchron übertragen. Bei der asynchronen Übertragung werden an den Knoten Zeitverzögerungen in Kauf genommen.

Erfindungsgemäß werden freie Zeitschlitze, die nicht für Synchronübertragungen reserviert sind, in den Knoten mit den asynchron übertragbaren Symbolvektoren aufgefüllt. Auf diese Weise kann die vorhandene Netzkapazität voll ausgenutzt werden, ohne dass die Übertragungsgeschwindigkeit der zeitkritischen, synchron zu übertragenden Daten beeinträchtigt ist.

Das erfindungsgemäße Verfahren verbindet die Vorteile der asynchronen Übertragungstechnik, z. B. ATM, und der synchronen Übertragungstechnik, z. B. Telekom Net, mit den außerordentlichen Vorteilen einer dezentralen funkbasierten Netzstruktur.

Im Folgenden wird die Erfindung anhand einer lediglich ein Ausführungsbeispiel darstellenden Zeichnung erläutert. Es zeigen schematisch
- Fig. 1: den Aufbau eines Ad Hoc-Netzwerkes,
- Fig. 2: die Struktur der erfindungsgemäß übertragenen Datenpakete,
- Fig. 3: die Vermittlung der Datenpakete an den Knoten des Netzwerkes,
- Fig. 4: das Prinzip der Datenübertragung nach dem erfindungsgemäßen Verfahren.

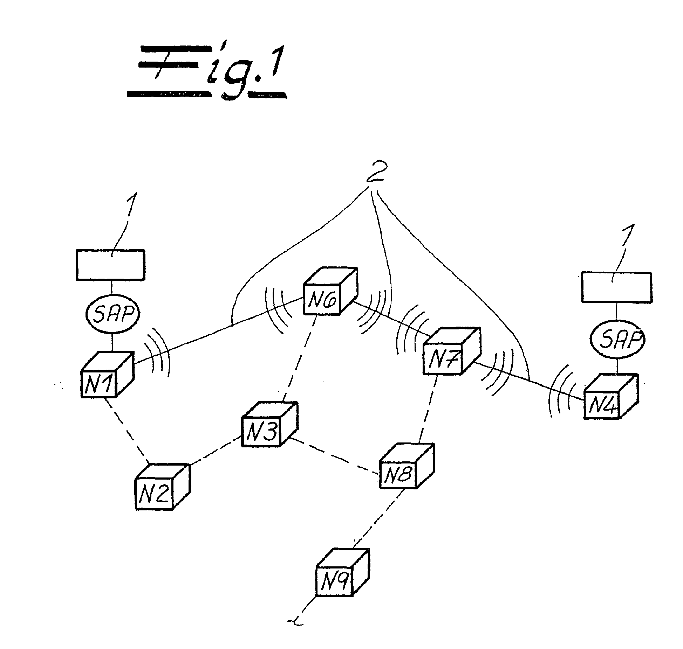

Das in Fig. 1 dargestellte Netzwerk ist aus beliebig verteilten Netzknoten N aufgebaut, die jeweils eine Empfangseinrichtung mit Eingabecontroller, eine Vermittlungsstelle und eine Sendeeinrichtung mit Ausgabecontroller aufweisen. Das Netzwerk organisiert die Abläufe selbst, wobei zusätzliche Knoten nach einer festgelegten Prozedur in das Netzwerk integriert werden. Die Knoten N weisen definierte Dienstschnittstellen (SAP) zum Anschluss unterschiedlicher Applikationen 1 auf.

Für eine zu übertragene logische Verbindung wird nach einem Routingverfahren der Übertragungsweg 2 von einem Startknoten N1 zu einem Zielknoten N4 über zwischenliegende Knoten N6, N7 festgelegt, wobei die Knoten lokale Adress- und Steuerinformationen (Local Connection Identifier LCI) verwalten, die den logischen Verbindungen zugeordnet sind und den vorhergehenden Knoten des Übertragungsweges mitgeteilt werden.

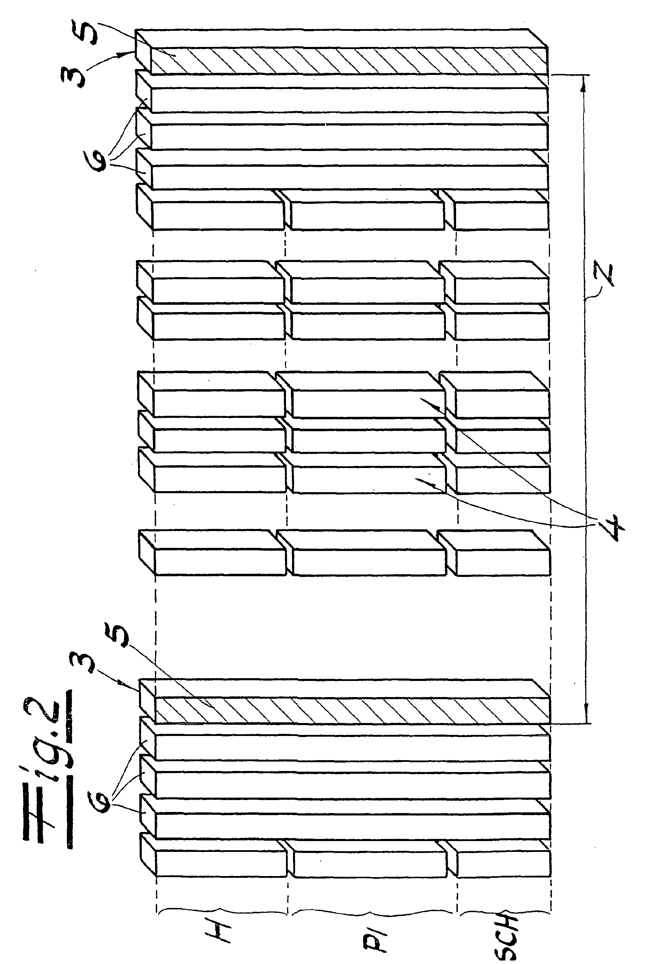

Bei dem erfindungsgemäßen Verfahren werden die Sende- und Empfangseinrichtungen benachbarter Knoten eines Übertragungsweges unter Verwendung zyklisch gesendeter Kennungen 3, deren Abstände einen Zeitrahmen Z definieren, synchronisiert. Die Datenpakete werden nach einem Frequenzmultiplex-Verfahren in Form von Symbolvektoren 4 übertragen, die aus einer fest vorgegebenen Anzahl von parallel übertragenen Symbolen S und einem Kopf (Header H) zur Identifizierung des Symbolvektors bestehen. Der Bereich Payload (PI) steht zur Übertragung der Nutzinformationen zur Verfügung. Ferner kann der Symbolvektor ein Element SCH zur Signalkontrolle aufweisen, die über mehrere Vektoren gebildet wird und zur Signalisierung zwischen zwei verbundenen Knoten dient. (Fig. 2)

In dem festgelegten Zeitrahmen Z werden auch systemspezifische Symbolvektoren 5 zur Synchronisation der Sende- und Empfangseinrichtungen benachbarter Knoten übertragen. Die systemspezifischen Symbolvektoren 5 tragen eine bekannte Sequenz, z. B. M-Sequenz, die zyklisch gesendet wird und deren Abstand den Zeitrahmen Z definiert. Die Sende- und Empfangseinrichtungen der Knoten können mit der M-Sequenz Funkkanalparameter messen und die Modulation einstellen sowie Synchronfehler zwischen den Knoten berechnen und ausgleichen. Ferner werden innerhalb des Zeitrahmens Z, der auch als "Hyperframe" bezeichnet wird, Leervektoren 6 eingebaut. Diese tragen keine Informationen und dienen dazu, Laufzeitunterschiede in den Knoten auszugleichen. Zur Beseitigung von Synchronfehlern zwischen den Empfangs- und Sendeeinrichtungen benachbarter Knoten werden bei Bedarf in einem Knoten solche Leervektoren 6 entfernt.

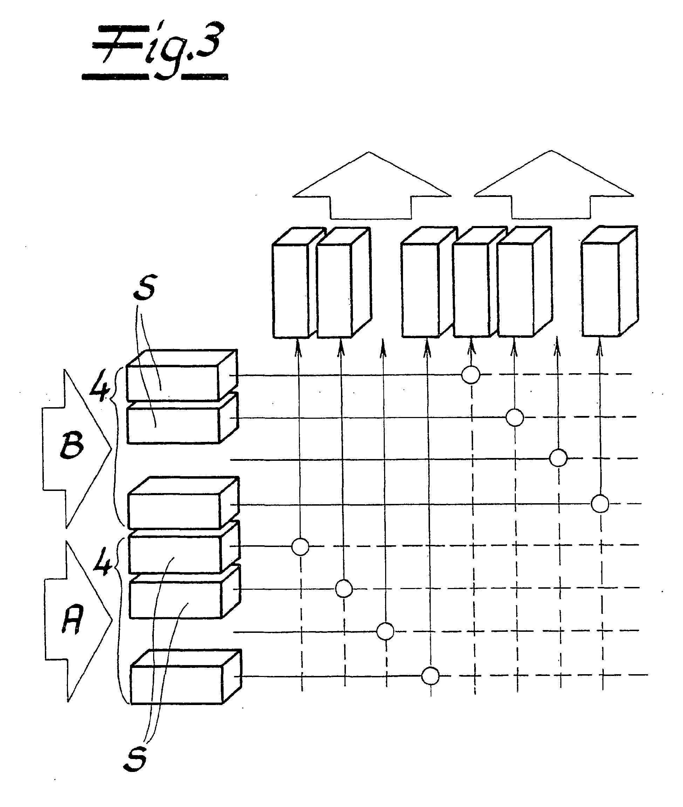

Der Fig. 3 entnimmt man, dass die an einem Knoten eintreffenden Symbolvektoren 4 von logischen Verbindungen A, B eines Empfangskanals auf einen hiervon verschiedenen Sendekanal geschaltet werden, wobei die zu einem Symbolvektor 4 gehörenden Symbole S₁...Sₙ parallel weitergeschaltet und übertragen werden.

Die Knoten des Übertragungsweges reservieren innerhalb des Zeitrahmens Zeitschlitze für die Übertragung von synchron zu übertragenden Datenpaketen einer logischen Verbindung, wobei zu Beginn einer Synchronübertragung der logischen Verbindung ein Startsignal gesendet wird, anschließend die Datenpakete in den vorher festgelegten Zeitschlitzen übertragen werden und die Synchronübertragung mit einem Stoppsignal unterbrochen wird. Bei der Festlegung eines Übertragungsweges für eine synchron zu übertragende logische Verbindung wird geprüft, ob die für die Synchronübertragung erforderlichen Zeitschlitze auf Funkkanälen zur Verfügung stehen. Alle Knoten des Übertragungsweges reservieren daraufhin die Zeitschlitze und teilen den Vorgängerknoten die Adressinformation und die reservierten Zeitschlitze mit. Systembedingt können in einem Ad Hoc-Netz mehrere Applikationen konkurrierend zur gleichen Zeit Funkressourcen benötigen. Zwei unabhängige logische Verbindungen können somit zufälligerweise zwischen zwei Knoten dieselben Zeitschlitze beanspruchen.

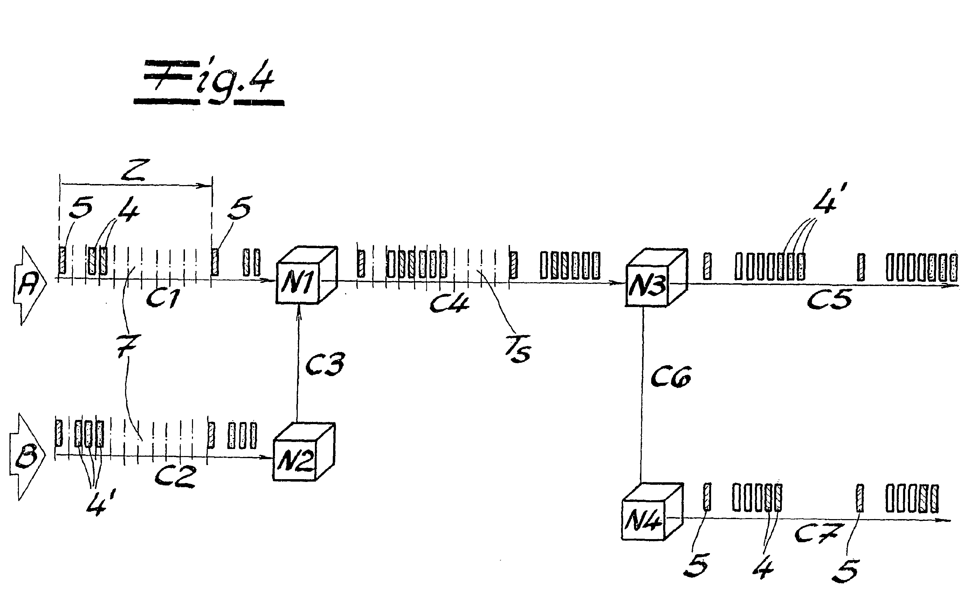

Bei der Festlegung des Übertragungsweges und der Zeitschlitze wird für eine synchron zu übertragende Verbindung an einem Knoten eine Zeitverzögerung vorgeschlagen, wenn zwei unabhängige logische Verbindungen zwischen zwei Knoten dieselben Zeitschlitze beanspruchen, wobei alle Zeitverzögerungen des Übertragungsweges von dem Startknoten bis zum Zielknoten addiert werden und die Summe der Zeitverzögerung für die Synchronübertragung den Vorgabewert nicht überschreiten darf. Dies soll anhand des in Fig. 4 dargestellten Beispiels erläutert werden.

Die Figur zeigt eine typische Realisierung mit zwei konkurrierenden Applikationen. Im Beispiel überträgt die Applikation A zwei Symbolvektoren 4 über Knoten N1, N3 und N4 und die Applikation B drei Symbolvektoren 4' über die Knoten N2, N1 und N3. Die Zeitrahmen Z sind synchronisiert, d. h. alle M-Sequenzvektoren starten zur gleichen Zeit.

Systembedingt können auf dem Kanal C4 nicht zur gleichen Zeit die Symbolvektoren 4, 4' der Applikationen A und B übertragen werden, daher wird die Applikation B im Knoten N1 verzögert. Insgesamt ergeben sich bei der dargestellten Konstellation für die Applikation A drei Verzögerungseinheiten TS und für die Applikation B insgesamt vier Verzögerungseinheiten TS.

In Fig. 4 ist dargestellt, dass freie Zeitschlitze 7 zur Verfügung stehen, die für synchron zu übertragende Datenpakete nicht benötigt werden. Diese freien Zeitschlitze werden in den Knoten mit asynchron übertragbaren Datenpaketen aufgefüllt, die aus einem Ausgangspuffer des Knotens ausgelesen werden. Die asynchrone Datenübertragung unter Ausnutzung freier Zeitschlitze wird für alle paketorientierten Applikationen genutzt, die keine zeitliche Bezugnahme zur Datenübertragung haben. Die Synchronübertragung bleibt Real Time-Applikationen wie "Voice Over IP" oder "Video On Demand" vorbehalten. Hier kann die gesamte Kapazität eines Symbolvektors zur Übertragung der Nutzinformationen verwendet werden.

## Patentansprüche

1. Verfahren zum Betrieb eines Ad-hoc-Netzwerkes zur drahtlosen Übertragung von synchronen und asynchronen Nachrichten,
wobei das Netzwerk aus beliebig verteilten Netzknoten aufgebaut ist, die jeweils eine Empfangseinrichtung mit Eingabecontroller, eine Vermittlungsstelle und eine Sendeeinrichtung mit Ausgabecontroller aufweisen,
wobei für zu übertragende logische Verbindungen nach einem Routingverfahren Übertragungswege von einem Startknoten zu einem Zielknoten über zwischenliegende Knoten festgelegt werden und
wobei die Knoten lokale Adress- und Steuerinformationen (LCI) verwalten, die den logischen Verbindungen zugeordnet sind und dem vorhergehenden Knoten des Übertragungsweges mitgeteilt werden,
**dadurch gekennzeichnet,**
**dass** die Nachrichten nach einem Frequenzmultiplex-Verfahren in Form von Symbolvektoren übertragen werden, die aus einer fest vorgegebenen Anzahl von parallel übertragenen Symbolen bestehen,
**dass** die Sende- und Empfangseinrichtungen benachbarter Knoten eines Übertragungsweges unter Verwendung zyklisch gesendeter Kennungen, deren Abstände einen Zeitrahmen definieren, synchronisiert werden,
**dass** die Knoten des Übertragungsweges innerhalb des Zeitrahmens Zeitschlitze für die Übertragung von synchron zu übertragenden Symbolvektoren einer logischen Verbindung reservieren, wobei zu Beginn einer Synchronübertragung der logischen Verbindung ein Startsignal gesendet wird, anschließend die Datenpakete in den vorher festgelegten Zeitschlitzen übertragen werden und die Synchronübertragung mit einem Stoppsignal abgeschlossen wird,
**dass** nach der Festlegung eines Übertragungsweges für eine synchron zu übertragende logische Verbindung geprüft wird, ob die für die Synchronübertragung erforderlichen Zeitschlitze auf Funkkanälen zur Verfügung stehen, und dass alle Knoten des Übertragungsweges die Zeitschlitze reservieren sowie den Vorgängerknoten die Adressinformationen und den reservierten Zeitschlitz mitteilen,
**dass** bei der Festlegung des Übertragungsweges und der Zeitschlitze für eine synchron zu übertragende Verbindung an einem Knoten eine Zeitverzögerung vorgeschlagen wird, wenn zwei unabhängige logische Verbindungen zwischen zwei Knoten dieselben Zeitschlitze beanspruchen, wobei alle Zeitverzögerungen des Übertragungsweges von dem Startknoten bis zum Zielknoten addiert werden und die Summe der Zeitverzögerung für die Synchronübertragung einen Vorgabewert nicht überschreiten darf, und
**dass** freie Zeitschlitze in den Knoten mit asynchron übertragenen Nachrichten in Form von Symbolvektoren aufgefüllt werden, die einen Kopf zur Identifizierung des Symbolvektors haben und aus einem Ausgangspuffer des Knotens ausgelesen werden.

2. Verfahren nach Anspruch 1, **dadurch gekennzeichnet, dass** in dem festgelegten Zeitrahmen systemspezifische Symbolvektoren zur Synchronisation der Sende- und Empfangseinrichtung benachbarter Knoten übertragen werden.

3. Verfahren nach Anspruch 2, **dadurch gekennzeichnet, dass** innerhalb des Zeitrahmens eine Anzahl von Leervektoren übertragen werden, die zur Beseitigung von Synchronfehlern zwischen Empfangs- und Sendeeinrichtungen benachbarter Knoten bei Bedarf in einem Knoten entfernt werden.

4. Verfahren nach einem der Ansprüche 1 bis 3, **dadurch gekennzeichnet, dass** eine Fehlererkennung und -korrektur über einen Symbolvektor und/oder über einen parallel laufenden Symbolstrom erfolgt.

5. Verfahren nach einem der Ansprüche 1 bis 4, **dadurch gekennzeichnet, dass** die an einem Knoten eintreffenden Symbolvektoren eines Empfangskanals auf einen hiervon verschiedenen Sendekanal geschaltet werden, wobei die zu einem Symbolvektor gehörenden Symbole parallel weitergeschaltet und übertragen werden.

## Claims

1. A method for operating an ad-hoc network for the wireless transmission of synchronous and asynchronous messages,
where the network is configured from arbitrarily distributed network nodes, each of which has a receiver equipped with an input controller, a router, and a transmitter equipped with an output controller,
where transmission paths for logical links to be transmitted extending from a start node to a destination node via intermediate nodes are established according to a routing procedure, and
where the nodes manage local address and control information (LCI) that is assigned to the logical links and communicated to the precursor node of the transmission path,
wherein
the messages are transmitted according to a frequency-division multiplexing method in the form of symbol vectors consisting of a prescribed number of symbols transmitted in parallel,
the transmitters and receivers of neighboring nodes of a transmission path are synchronized by cyclically transmitted codes whose periodicities define a time frame,
the nodes of the transmission path reserve time slices within the time frame for transmitting symbol vectors of a logical link that are to be synchronously transmitted, where a start signal is transmitted at the outset of a synchronous transmission of the logical link, data packets are subsequently transmitted during the reserved time slices, and their synchronous transmission is terminated by a stop signal,
whether the time slices needed for synchronous transmission on radio channels are available, whether all nodes of the transmission path reserve the time slices, and whether the precursor node communicates the address information and the time slice reserved are checked following establishment of a transmission path for a logical link to be synchronously transmitted,
in conjunction with establishing the transmission path and time slices for a link to be synchronously transmitted at a node, a time delay is proposed whenever two, independent, logical links between two nodes lay claim to the same time slice, where all time delays of the transmission path extending from the start node to the destination node are added together and the total time delay for the synchronous transmission may not exceed a prescribed value, and
any unused time slices at the nodes are padded out with asynchronously transmitted messages in the form of symbol vectors that have a header for identifying the symbol vector and are read out of an output buffer on the node.

2. A method according to claim 1, wherein system-specific symbol vectors are transmitted during the predefined time frame in order to synchronize the transmitters and receivers of neighboring nodes.

3. A method according to claim 2, wherein a number of null vectors that, if necessary, are withdrawn at a node in order to eliminate synchronization errors between the receivers and transmitters of neighboring nodes, are transmitted within the time frame.

4. A method according to any of claims 1 □ 3, wherein an error detection and correction via a symbol vector and/or via a symbol string that is transmitted in parallel takes place.

5. A method according to any of claims 1 □ 4, wherein the symbol vectors of a reception channel arriving at a node are switched to a transmission channel that is distinct from that reception channel, where the symbols associated with a symbol vector are forwarded and transmitted in parallel.

## Revendications

1. Procédé d'exploitation d'un réseau ad hoc pour la transmission sans fil d'informations synchrones et asynchrones,
dans lequel le réseau est composé de noeuds de réseau répartis de manière quelconque, qui présentent chacun un dispositif récepteur avec contrôleur d'entrée, une centrale téléphonique et un dispositif émetteur avec contrôleur de sortie,
dans lequel les voies de transmission, pour les liaisons logiques à transmettre selon une procédure de routine, sont déterminées d'un noeud de départ à un noeud d'arrivée, via des noeuds intermédiaires et
dans lequel les noeuds administrent des informations locales d'adresse et de commande (LCI) attribuées aux liaisons logiques et communiquées au noeud précédent sur la voie de transmission,
**caractérisé en ce que**
les informations sont transmises selon un procédé de multiplexage de fréquences, sous la forme de vecteurs symboliques composés d'un nombre fixe prédéfini de symboles transmis en parallèle,
les dispositifs émetteurs et récepteurs de noeuds contigus sur une voie de transmission sont synchronisés moyennant l'emploi d'indicatifs d'identification émis de façon cyclique, à des distances qui définissent un cadre temporel,
les noeuds de la voie de transmission réservent une liaison logique dans les canaux temporels du cadre temporel pour la transmission de vecteurs symboliques à transmettre de façon synchrone, un signal de départ étant envoyé au début de la transmission synchrone à la liaison logique, les groupes de données étant ensuite transmis dans les canaux temporels prédéfinis et la transmission synchrone étant clôturée par un signal d'arrêt,
l'on teste, une fois fixée la voie de transmission pour une liaison à transmettre de façon synchrone, si les canaux temporels nécessaires à la transmission synchrone sont disponibles sur des canaux radio et **en ce que** tous les noeuds de la voie de transmission réservent les canaux temporels et communiquent aux noeuds précédents les informations d'adresse et le canal temporel réservé,
lors de la fixation de la voie de transmission et du canal temporel pour une liaison à transmettre de façon synchrone, un retard est proposé au niveau d'un noeud lorsque deux liaisons logiques indépendantes réagissent entre deux noeuds du même canal temporel, tous les retards de la voie de transmission étant additionnés du noeud de départ au noeud d'arrivée et la somme des retards pour la transmission synchrone ne devant pas dépasser une valeur prédéfinie et
des canaux temporels libres dans les noeuds sont complétés par des informations transmises de manière asynchrone sous la forme de vecteurs symboliques, qui présentent une tête d'identification du vecteur symbolique et sont lus à partir d'un tampon de départ du noeud.

2. Procédé selon la revendication 1, **caractérisé en ce que**, dans le cadre temporel prédéfini, des vecteurs symboliques spécifiques au système sont transmis pour la synchronisation des dispositifs émetteur et récepteur de noeuds contigus.

3. Procédé selon la revendication 2, **caractérisé en ce que**, dans le cadre temporel, plusieurs vecteurs vides sont transmis, qui peuvent être enlevés d'un noeud au besoin, pour remédier à des erreurs de synchronisation entre dispositifs émetteur et récepteur de noeuds contigus.

4. Procédé selon l'une quelconque des revendications 1 à 3, **caractérisé en ce que** le repérage et la correction d'une erreur s'effectuent par l'intermédiaire d'un vecteur symbolique et/ou d'un courant symbolique circulant en parallèle.

5. Procédé selon l'une quelconque des revendications 1 à 4, **caractérisé en ce que** les vecteurs symboliques d'un canal récepteur présents sur un noeud sont commutés sur un canal émetteur distinct de lui, les symboles appartenant à un vecteur symbolique étant recommutés et transmis en parallèle.
